# EUROPÄISCHE PATENTSCHRIFT

(11) **EP 0 617 499 B1**
(45) Veröffentlichungstag und Bekanntmachung des Hinweises auf die Patenterteilung: **11.06.1997**
(21) Anmeldenummer: 94102764.1
(22) Anmeldetag: 24.02.1994
(51) Int. Cl.: H02H 9/00

(54) **Stromversorgungsschaltung**
Power supply circuit
Circuit d'alimentation en courant

(30) Priorität: 26.03.1993 DE 4309974
(43) Veröffentlichungstag der Anmeldung: 28.09.1994
(73) Patentinhaber: ROBERT BOSCH GMBH, 70442 Stuttgart (DE)
(72) Erfinder: Bumen, Werner, D-73230 Kirchheim-Oetlingen (DE)

(56) Entgegenhaltungen:
- EP-A- 0 350 639
- EP-A- 0 423 885
- DE-A- 3 308 320
- US-A- 4 328 459

## Beschreibung

### Stand der Technik

Die Erfindung geht aus von einer Stromversorgungsschaltung nach der Gattung des Hauptanspruchs. Eine solche Stromversorgungsschaltung ist aus der EP-A-0 350 639 bekannt. Aus der Fachzeitschrift ELV journal, Heft 6, 1991, S. 70 - 71 ist eine Stromversorgungsschaltung bekannt, die den Einschaltstrom von Glühlampen begrenzt. Der Einschaltstrom wird mit einem ohmschen Widerstand begrenzt, der nach Ablauf einer vorgegebenen Zeit mit einem Halbleiterschalter kurzgeschlossen wird, so daß der stationäre Lampenstrom bei geringsten Verlusten fließen kann. Die Einschaltstrombegrenzung erhöht einerseits die Lebensdauer der Glühlampe und bewirkt andererseits eine Reduzierung der Spitzenbelastung der Energiequelle.

Der Erfindung liegt die Aufgabe zugrunde, eine Stromversorgungsschaltung anzugeben, die insbesondere zum Einschalten von Verbrauchern mit einem kapazitiven Lastanteil geeignet ist.

Die Aufgabe wird durch die im Hauptanspruch angegebenen Merkmale gelöst.

### Vorteile der Erfindung

Die erfindungsgemäße Stromversorgungsschaltung weist den Vorteil einer Anpassung an das Einschaltverhalten des elektrischen Verbrauchers auf. Erfindungsgemäß ist vorgesehen, daß eine erste Steuerschaltung in Abhängigkeit von einer Spannungsdifferenz zwischen Verbraucher und Energiequelle eine Einschaltstrom-Begrenzungsschaltung betätigt. Die erfindungsgemäße Schaltung ist insbesondere geeignet zum Einschalten von Verbrauchern mit einem kapazitiven Lastanteil. Solche Verbraucher sind beispielsweise selbst Stromversorgungsvorrichtungen` insbesondere getaktete Stromversorgungen, die einen Kondensator am Eingang enthalten, der eine vergleichsweise hohe Kapazität aufweist. Der Ladestrom dieses Kondensators hängt von der Spannungsdifferenz zwischen Energiequelle und Kondensator sowie vom Innenwiderstand der Energiequelle und von weiteren parasitären Widerständen in den Zuleitungen ab. Mit der erfindungsgemäßen Stromversorgungsschaltung ist es möglich, den Verbraucher erst dann unmittelbar mit der Energiequelle zu verbinden, wenn die Spannungsdifferenz eine Schwelle unterschritten hat, die in der ersten Steuerschaltung festgelegt ist.

Die erfindungsgemäße Stromversorgungsschaltung eignet sich insbesondere für Verbraucher, die mit einer Batterie als Energiequelle verbunden werden. Ein Beispiel eines solchen Verbrauchers ist ein Kraftfahrzeugtestgerät, das mit der Kraftfahrzeugbatterie verbunden wird. Die Bildung von Funken beim Anschließen an die Batterie wird wirkungsvoll verhindert. Die Verhinderung einer Funkenbildung vermindert Unfallrisiken und reduziert die Gefahr von Beschädigungen elektrischer Bauteile, die durch Spannungsspitzen und/oder durch hohe Spitzenströme entstehen könnten.

Vorteilhafte Weiterbildungen und Verbesserungen der im Hauptanspruch angegebenen Einschaltstrom-Begrenzungsschaltung ergeben sich aus den Unteransprüchen.

Eine einfache Ausgestaltung sieht einen Widerstand zum Begrenzen des Stroms vor, der mit einem Relais überbrückbar ist.

Eine vorteilhafte Weiterbildung sieht die Abschaltung des Verbrauchers bei betätigter Einschaltstrom-Begrenzungsschaltung vor. Diese Maßnahme reduziert den erforderlichen Einschaltstrom und bildet gleichzeitig einen Schutz gegen Unterspannung am Verbraucher.

Erfindungsgemäß ist in der Stromversorgungsschaltung der Einsatz einer zweiten Steuerschaltung vorgesehen, die in Abhängigkeit von einem Absinken der am Verbraucher liegenden Spannung die Einschaltstrom-Begrenzungsschaltung betätigt. Diese Maßnahme ermöglicht die Vorgabe einer größeren Spannungsdifferenz, welche die erste Steuerschaltung auswertet, um beispielsweise einen erweiterten Eingangsspannungsbereich des Verbrauchers zuzulassen. Einen Spannungsabfall am Verbraucher, den einerseits die erste Steuerschaltung noch nicht detektiert, der andererseits aber einen erhöhten Wiedereinschaltstrom zur Folge hätte, führt sofort zum Betätigen der Einschaltstrom-Begrenzungsschaltung.

Eine vorteilhafte Ausgestaltung der zweiten Steuerschaltung sieht eine Differenzierung der Spannung nach der Zeit am Verbraucher vor.

Eine andere vorteilhafte Ausgestaltung sieht den Einsatz eines Spitzenspannungsdetektors in der zweiten Steuerschaltung vor, wobei die Spannung am Verbraucher mit der am Spitzenspannungsdetektor liegenden Spannung verglichen wird. Der Vorteil dieser Ausgestaltung liegt darin, daß langsame Spannungsänderungen, die ein Differenzierer nicht mehr detektieren würde, erkannt werden.

Weitere vorteilhafte Weiterbildungen und Verbesserungen der erfindungsgemäßen Stromversorgungsschaltung ergeben sich aus weiteren Unteransprüchen.

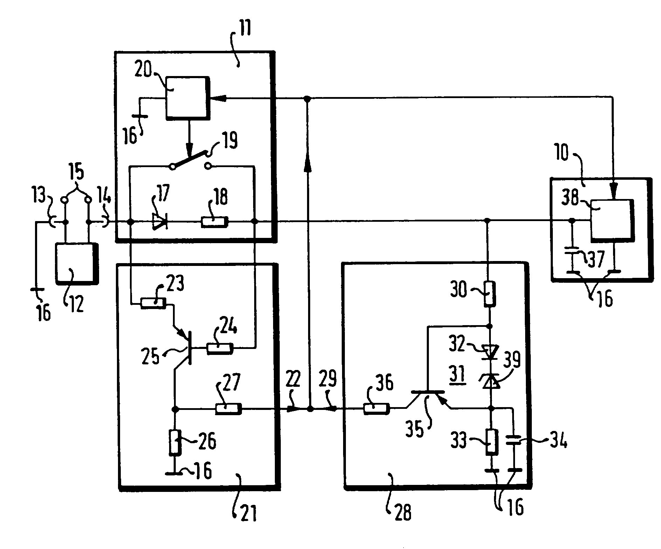

Die erfindungsgemäße Stromversorgungsschaltung wird anhand der Zeichnung in der folgenden Beschreibung näher erläutert.

### Zeichnung

In der Figur ist ein Blockschaltbild eines Ausführungsbeispiels einer erfindungsgemäßen Stromversorgungsschaltung gezeigt.

Die Figur zeigt einen elektrischen Verbraucher 10, der über eine Einschaltstrom-Begrenzungsschaltung 11 mit einer Energiequelle 12 verbindbar ist. Die Verbindung ist mit Steckkontakten 13, 14 angedeutet. Die Steckkontakte 13, 14 sind mit Anschlüssen 15 der Energiequelle 12 verbindbar, an die andere, nicht näher gezeigte elektrische Verbraucher anschließbar sind. Ein Steckkontakt 13 ist mit einer Schaltungsmasse 16 verbindbar, während über den Steckkontakt 14 die Verbindung zur Einschaltstrom-Begrenzungsschaltung 11 hergestellt wird.

Die Einschaltstrom-Begrenzungsschaltung 11 enthält eine Reihenschaltung, die eine Verpolschutzdiode 17 und einen Widerstand 18 aufweist. Die Reihenschaltung 17, 18 ist mit einem Schalter 19 überbrückbar, der von einer Schaltersteuerung 20 betätigbar ist.

Parallel zur Reihenschaltung aus Verpolschutzdiode 17 und Widerstand 18 ist eine erste Steuerschaltung 21 geschaltet. Die erste Steuerschaltung 21 gibt ein erstes Betätigungssignal 22 an die Einschaltstrom-Begrenzungsschaltung 11 ab. Das erste Betätigungssignal 22 ist von einer Komparatoranordnung bereitgestellt, die Spannungsteilerwiderstände 23, 24, einen Transistor 25, einen Arbeitswiderstand 26 sowie einen ersten Entkopplungswiderstand 27 enthält. Die Spannungsteilerwiderstände 23, 24 sind parallel zur Reihenschaltung aus Verpolschutzdiode 17 und Widerstand 18 geschaltet. Der Emitteranschluß des Transistors 25 liegt am Widerstand 23 und der Basisanschluß liegt am Widerstand 24. Der Kollektoranschluß 25 ist über den Arbeitswiderstand 26 mit Masse 16 verbunden. Der erste Entkopplungswiderstand 27 liegt unmittelbar am Kollektoranschluß des Transistors 25.

Eine zweite Steuerschaltung 28 stellt ein zweites Betätigungssignal 29 bereit, das der Einschaltstrom-Begrenzungsschaltung 11 zugeführt ist. Die zweite Steuerschaltung 28 ist mit der zwischen der Einschaltstrom-Begrenzungsschaltung 11 und dem Verbraucher 10 liegenden Verbindungsleitung über einen Ladewiderstand 30 verbunden. Die zweite Steuerschaltung 28 enthält einen Spitzenwertdetektor 31, der eine erste Diode 32, eine Begrenzerdiode 39, einen Entladewiderstand 33 sowie einen Speicherkondensator 34 enthält. Der Ladewiderstand 30 ist mit dem Anodenanschluß der Diode 32 verbunden, die unmittelbar zur Katode der Begrenzerdiode 39 führt. Der Anodenanschluß der Diode 39 führt zu einer Parallelschaltung, die aus dem Entladewiderstand 33 und dem Speicherkondensator 34 gebildet wird. Parallel zu den Dioden 32, 39 ist die Emitter-Basisstrecke eines Transistors 35 geschaltet. Am Anodenanschluß der Diode 39 liegt der Emitteranschluß und am Anodenanschluß der Diode 32 der Basisanschluß des Transistors 35. Der Kollektoranschluß des Transistors 35 gibt über einen zweiten Entkopplungswiderstand 36 das zweite Betätigungssignal 29 aus.

Der Verbraucher 10 enthält eingangsseitig einen Kondensator 37 sowie eine weitere Schaltung 38.

Das erste und das zweite Betätigungssignal 22, 29 werden sowohl der in der Einschaltstrom-Begrenzungschaltung 11 enthaltenen Schaltersteuerung 20 als auch der im elektrischen Verbraucher 10 enthaltenen weiteren Schaltung 38 zugeleitet.

Die erfindungsgemäße Stromversorgungsschaltung arbeitet folgendermaßen:

Der Verbraucher 10 enthält keine eigene Energiequelle. Der Verbraucher 10 ist zur Versorgung mit elektrischer Energie mit der Energiequelle 12 zu verbinden. Die Energiequelle 12 ist beispielsweise ein Energieversorgungsnetz oder beispielsweise eine Batterie. Der Verbraucher 10 kann sowohl eine Wechselspannungs- als auch eine Gleichspannungsversorgung benötigen. Das in der Figur gezeigte Ausführungsbeispiel ist auf eine Gleichspannungsversorgung abgestellt. Gegebenenfalls kann der Verbraucher 10 einen Gleichrichter enthalten, der eine Wechselspannung in eine pulsierende Gleichspannung umsetzt. Die erfindungsgemäße Stromversorgungsschaltung ist insbesondere für batteriebetriebene Verbraucher 10 geeignet. Ein solcher Verbraucher ist beispielsweise das bereits erwähnte Kraftfahrzeugtestgerät, das mit einer in einem Kraftfahrzeug angeordneten Batterie als Energiequelle 12 zu verbinden ist.

In Abhängigkeit von der Ausgestaltung des elektrischen Verbrauchers 10 fließt beim Anschließen der Steckkontakte 13, 14 an die Energiequelle 12 ein hoher Einschaltstrom. Die Stromerhöhung gegenüber dem stationären Betriebsstrom des Verbrauchers tritt beispielsweise bei temperaturabhängigen Widerständen am Eingang des Verbrauchers 10 auf. Ein extrem erhöhter Einschaltstrom tritt bei Verbrauchern 10 auf, die eingangsseitig eine kapazitive Last aufweisen, die in dem in der Figur gezeigten Ausführungsbeispiel durch den Kondensator 37 symbolisiert ist. Der im Einschaltaugenblick theoretisch unendlich hohe Strom wird in der Praxis durch den Innenwiderstand der Energiequelle 12 sowie durch parasitäre Leitungswiderstände begrenzt. Der erhöhte Eingangsstrom hat in allen Fällen bei der Kontaktierung der Steckkontakte 13, 14 mit den Anschlüssen 15 der Energiequelle 12 zur Folge, daß eine Funkenbildung auftritt. Durch die Funkenbildung entsteht zunächst unmittelbar eine Verletzungsgefahr für eine Person. Bei der Funkenbildung entstehen Spannungsspitzen, die sowohl dem Verbraucher 10 als auch weiteren, in der Figur nicht gezeigten Verbrauchern, die an den Anschlüssen 15 der Energiequelle 12 angeschlossen sind, gefährlich werden können. Die Funkenbildung während der Kontaktierung der Steckkontakte 13, 14 wird durch eine unregelmäßige Kontaktgabe während des Kontaktierungsvorgangs verstärkt.

Die erfindungsgemäß vorgesehene Einschaltstrom-Begrenzungsschaltung 11 reduziert den Einschaltstrom des Verbrauchers 10 auf einen niedrigen Wert, der das Auftreten einer Funkenbildung nicht mehr zuläßt. Als strombegrenzendes Mittel ist der Widerstand 18 vorgesehen, der geeignet zu bemessen ist. Gegebenenfalls ist die Verpolschutzdiode 17 in Reihe zu dem Widerstand 18 geschaltet. Die erste Steuerschaltung 21 vergleicht die am Verbraucher 10 liegende Spannung mit der am Steckkontakt 14 auftretenden Spannung der Energiequelle 12. Die erste Steuerschaltung 21 enthält eine Komparatoranordnung, die das erste Betätigungssignal 22 an die in der Einschaltstrom-Begrenzungsschaltung 11 enthaltene Schaltersteuerung 20 abgibt, wenn die Spannungsdifferenz oberhalb einer vorgegebenen Schwelle liegt. Die Ausgabe des ersten Betätigungssignals 22 ist im Ausführungsbeispiel derart definiert, daß ein Auftreten des ersten Betätigungssignals 22 die Schaltersteuerung 20 das Schließen des Schalters 19 veranlaßt. Der Schalter 19 ist demnach während des Fließens des Einschaltstroms geöffnet.

Im gezeigten Ausführungsbeispiel ist die in der ersten Steuerschaltung 21 enthaltene Komparatoranordnung zum Detektieren einer solchen Spannungsdifferenz ausgelegt, bei der die Eingangsspannung höher ist als die am Verbraucher 10 liegende Spannung. In einer Weiterbildung, die im Ausführungsbeispiel nicht gezeigt ist, kann die erste Steuerschaltung 21 eine Komparatoranordnung enthalten, die sowohl eine positive als auch eine negative Spannungsdifferenz detektiert. Eine negative Spannungsdifferenz bedeutet, daß die Spannung am Verbraucher 10 oberhalb der Spannung der Energiequelle 12 liegt. Ein derartiger Betriebszustand tritt beim Entfernen des Steckkontakts 13, 14 von den Anschlüssen 15 der Energiequelle 12 auf. Eine unregelmäßige Kontaktgabe beim Lösen der Steckkontakte 13, 14 bewirkt, daß selbst während des Trennens des Verbrauchers 10 von der Energiequelle 12 unbeabsichtigt dieser Zustand auftreten kann, wobei durch den unregelmäßigen Kontaktierungsvorgang der erhöhte Einschaltstrom auftreten kann.

Die in der ersten Steuerschaltung 21 enthaltene Komparatoranordnung enthält die Spannungsteilerwiderstände 23, 24, die eine Vorgabe der Spannungsdifferenz ermöglichen. Der Transistor 25 schaltet durch, wenn die Emitter-Basisspannung die Flußspannung erreicht. Vor dem Erreichen der Flußspannung ist das erste Betätigungssignal 22 über den Arbeitswiderstand 26 auf das Massepotential gezogen. Nach dem Durchschalten des Transistors 25 fließt ein Strom in Transistor 25, der einen Spannungsabfall am Arbeitswiderstand 26 zur Folge hat. Der Spannungshub am Arbeitswiderstand 26 entspricht dem Auftreten des ersten Betätigungssignals 22. Eine Komparatoranordnung, welche die zuvor beschriebene negative Spannungsdifferenz auswerten kann, ist einfach dadurch zu realisieren, daß der Emitter- und der Basisanschluß des Transistors 25 vertauscht werden. Gegebenenfalls sind daher die Bauteile 23 - 27 der ersten Steuerschaltung doppelt vorhanden.

Die Überwachung einer Spannungsdifferenz zwischen dem Verbraucher 10 und der Energiequelle 12 muß die an der Verpolschutzdiode 17, die am Widerstand 18 sowie die an parasitären Leitungswiderständen abfallenden Spannungen berücksichtigen. Weiterhin ist zu berücksichtigen, daß der Verbraucher 10 gegebenenfalls an einer Energiequelle 12 betreibbar ist, die unterschiedliches Potential aufweist. Der Eingangsspannungsbereich eines batteriebetriebenen Verbrauchers 10 kann beispielsweise zwischen 8 Volt und 27 Volt liegen. Dieser Spannungsbereich kann in Bordnetzen von Kraftfahrzeugen ohne weiteres auftreten.

Erfindungsgemäß ist deshalb in der Stromversorgungsschaltung der Einsatz der zweiten Steuerschaltung 28 vorgesehen, die das zweite Betätigungssignal 29 in Abhängigkeit von einem Spannungsabfall am Verbraucher 10 abgibt. Bei dieser Weiterbildung ist die in der Figur gezeigte Ausgestaltung der ersten Steuerschaltung 21 mit einer Komparatoranordnung ausreichend, die lediglich eine positive Spannungsdifferenz zwischen Verbraucher 10 und Energiequelle 12 auswertet, wobei die positive Spannungsdifferenz bedeutet, daß die Spannung der Energiequelle oberhalb oder höchstens gleich der Spannung am Verbraucher 10 ist. Die zweite Steuerschaltung 28 sorgt dafür, daß bei einem Wackelkontakt der Steckkontakte 13, 14 oder bei einem gewollten Lösen der Steckkontakte 13, 14 das zweite Betätigungssignal 29 sofort bei einem festgestellten Spannungsabfall am Verbraucher 10 ausgegeben wird, das über die Schaltersteuerung 11 den Schalter 19 öffnet. Ein erneutes Überschreiten der Schaltschwelle der ersten Steuerschaltung 21 braucht somit nicht abgewartet zu werden. Das Auftreten von unzulässig hohen Einschaltströmen beim Wiedereinschalten infolge eines Wackelkontakts der Steckkontakte 13, 14 oder infolge eines unregelmäßigen Kontaktes beim gewollten Lösen der Steckkontakte 13, 14, der insbesondere bei einem kapazitiven Lastanteil im Verbraucher 10 auftreten kann, wird somit wirkungsvoll verhindert.

Die zweite Steuerschaltung 28 kann beispielsweise als Differenzierschaltung ausgestaltet sein. Eine solche Differenzierschaltung leitet die am Eingang des Verbrauchers 10 liegende Spannung nach der Zeit ab. Nach Überschreiten einer vorgegebenen Schwelle wird das zweite Betätigungssignal 29 ausgegeben.

Eine andere Ausgestaltung der zweiten Steuerschaltung ist in der Figur gezeigt. Die zweite Steuerschaltung 28 enthält den Spitzenspannungsdetektor 31, der die Spitzenspannung am Eingang des Verbrauchers 10 erfaßt und im Speicherkondensator 34 festhält. Der Speicherkondensator 34 wird über den Widerstand 30 sowie über die Dioden 32, 39 geladen. Der Transistor 35, dessen Emitter-Basis-strecke parallel zu den Dioden 32, 39 geschaltet ist, ist während des Ladevorgangs gesperrt. Sinkt die Spannung am Verbraucher 10 gegenüber der am Speicherkondensator 34 liegenden Spannung 34 ab, sperren die Dioden 32, 32, 39. Beim Erreichen einer Spannungsdifferenz, die der Durchlaßspannung der Emitter-Basis-Strecke des Transistors 35 entspricht, schaltet der Transistor 35 durch und gibt über den zweiten Arbeitswiderstand 36 das zweite Betätigungssignal 29 aus. Der Speicherkondensator 34 wird während dieses Vorgangs entladen. Der Entladewiderstand 33 hat einerseits die Aufgabe, einen bestimmten Pegelbereich am Speicherkondensator 34 festzulegen. Andererseits hat er die Aufgabe, die Spannung am Speicherkondensator 34 bei einer Spannungsänderung am Verbraucher 10, die innerhalb eines zulässigen Bereichs liegt, durch Entladen des Kondensators 34 nachzufahren. Die Begrenzerdiode 39 hält die vorgegebene Spannungsdifferenz zwischen dem Eingang des Verbrauchers 10 und dem Speicherkondensator 34 konstanter als es mit den Widerständen 30, 33 allein möglich wäre.

Die beiden Betätigungssignale 22, 29 betätigen nicht nur die Schaltersteuerung 20 in der Einschaltstrom-Begrenzungsschaltung 11. Die Betätigungssignale 22, 29 können auch der weiteren Schaltung 38 im Verbraucher 10 zugeführt sein. Beim Auftreten der Betätigungssignale 22, 29 kann beispielsweise der Verbraucher 10 abgeschaltet werden. Mit dieser Maßnahme wird erreicht, daß der Stromfluß in die weitere Schaltung 38 des Verbrauchers 10 während des Einschaltvorgangs unterbunden ist. Der reduzierte Strom während des Einschaltvorgangs kann daher vollständig zur Ladung des Kondensators 37 verwendet werden. Der Kondensator 37 erreicht in kürzestmöglicher Zeit die von der Energiequelle 12 gegebene Betriebsspannung.

Der Schalter 19 zum Überbrücken des Widerstands 18 ist vorzugsweise ein Schaltkontakt eines Relais, das von der Schaltersteuerung 20 betätigt ist. Der Einsatz eines Relais hat den Vorteil, daß die Widerstandsfähigkeit der Schaltung gegen Verpolung über ein durch die Verpolschutzdiode 17 gegebenes Maß hinaus erhöht ist.

Anstelle eines Relaiskontakts als Schalter 19 kann auch ein geeigneter Halbleiterschalter, vorzugsweise in MOSFET oder ein ein- und ausschaltbarer Thyristor vorgesehen sein.

## Patentansprüche

1. Stromversorgungsschaltung für einen mit einer Energiequelle (12) verbindbaren elektrischen Verbraucher (10), mit einer ersten Steuerschaltung (21), die in Abhängigkeit von einer Spannungsdifferenz zwischen Verbraucher (10) und Energiequelle (12) eine Einschaltstrom-Begrenzungsschaltung (11) betätigt, dadurch gekennzeichnet, daß eine zweite Steuerschaltung (28) vorgesehen ist, die in Abhängigkeit von einem Absinken der am Verbraucher (10) liegenden Spannung die Einschaltstrom-Begrenzungsschaltung (11) betätigt.

2. Schaltung nach Anspruch 1, dadurch gekennzeichnet, daß zur Strombegrenzung ein Widerstand (18) vorgesehen ist.

3. Schaltung nach Anspruch 2, dadurch gekennzeichnet, daß ein Schaltkontakt (19) eines Relais zum Überbrücken des Widerstands (18) vorgesehen ist.

4. Schaltung nach Anspruch 1, dadurch gekennzeichnet, daß die zweite Steuerschaltung (28) einen Differenzierer enthält.

5. Schaltung nach Anspruch 1, dadurch gekennzeichnet, daß die zweite Steuerschaltung (28) einen Spitzenspannungsdetektor (32, 33, 34) und einen Komparator (35) enthält.

6. Schaltung nach Anspruch 1, dadurch gekennzeichnet, daß ein Abschalten des Verbrauchers (10) beim Auftreten eines der Einschaltstrom-Begrenzungsschaltung (11) zugeführten Betätigungssignals (22, 29) vorgesehen ist.

7. Schaltung nach Anspruch 1, dadurch gekennzeichnet, daß als Energiequelle (12) eine Batterie vorgesehen ist.

8. Schaltung nach Anspruch 1, dadurch gekennzeichnet, daß der Verbraucher (10) eine kapazitive Last (37) enthält.

9. Schaltung nach Anspruch 7, dadurch gekennzeichnet, daß als Verbraucher (10) ein Kraftfahrzeugtestgerät vorgesehen ist, das mit der Kraftfahrzeugbatterie verbindbar ist.

## Claims

1. Power supply circuit for an electrical load (10) which can be connected to a power source (12) having a first control circuit (21), which actuates an inrush current limiting circuit (11) as a function of a voltage difference between load (10) and power source (12), characterized in that a second control circuit (28) is provided which actuates the inrush current limiting circuit (11) as a function of a drop in the voltage which is applied to the load (10).

2. Circuit according to Claim 1, characterized in that a resistor (18) is provided for the purpose of current limiting.

3. Circuit according to Claim 2, characterized in that a switching contact (19) of a relay is provided for the purpose of bridging the resistor (18).

4. Circuit according to Claim 1, characterized in that the second control circuit (28) contains a differentiator.

5. Circuit according to Claim 1, characterized in that the second control circuit (28) contains a peak voltage detector (32, 33, 34) and a comparator (35).

6. Circuit according to Claim 1, characterized in that disconnection of the load (10) is provided when an actuating signal (22, 29) fed to the inrush current limiting circuit (11) appears.

7. Circuit according to Claim 1, characterized in that a battery is provided as the power source (12).

8. Circuit according to Claim 1, characterized in that the load (10) contains a capacitive load (37).

9. Circuit according to Claim 7, characterized in that a motor vehicle test device, which can be connected to the motor vehicle battery, is provided as the load (10).

## Revendications

1. Circuit d'alimentation en courant pour un consommateur d'électricité (10) relié à une source d'énergie (12), comprenant un premier circuit de commande (21) qui actionne un circuit de limitation du courant de branchement (11) en fonction d'une différence de tension entre le consommateur (10) et la source d'énergie (12),
caractérisé en ce qu'
il comprend un second circuit de commande (28) qui actionne le circuit de limitation du courant de branchement (11) en fonction de la diminution de la tension aux bornes du consommateur (10).

2. Circuit selon la revendication 1,
caractérisé en ce qu'
il comporte une résistance (18) pour limiter le courant.

3. Circuit selon la revendication 2,
caractérisé par un contact de commutation (19) d'un relais pour court-circuiter la résistance (18).

4. Circuit selon la revendication 1,
caractérisé en ce que
le second circuit de commande (28) comporte un élément différentiateur.

5. Circuit selon la revendication 1,
caractérisé en ce que
le second circuit de commande (28) comporte un détecteur de tension de pointe (32, 33, 34) et un comparateur (35).

6. Circuit selon la revendication 1,
caractérisé par
la coupure du consommateur (10) lors de l'arrivée d'un signal de manoeuvre (22, 29) du circuit de limitation du courant de branchement (11).

7. Circuit selon la revendication 1,
caractérisé en ce que
la source d'énergie (12) est une batterie.

8. Circuit selon la revendication 1,
caractérisé en ce que
le consommateur (10) comporte une charge capacitive (37).

9. Circuit selon la revendication 7,
caractérisé en ce que
le consommateur (10) est un appareil de test de véhicule automobile qui peut être relié à la batterie du véhicule automobile.
